# EUROPEAN PATENT SPECIFICATION

(11) **EP 4 134 247 B1**
(45) Date of publication and mention of the grant of the patent: **30.07.2025**
(21) Application number: 21783802.8
(22) Date of filing: 24.03.2021
(51) Int. Cl.: B60C 9/00, B60C 9/22, B60C 13/00, B60C 15/06, D02G 3/48, D07B 1/06, B60C 15/00

(54) **PNEUMATIC TIRE**
LUFTREIFEN
PNEUMATIQUE

(30) Priority: 10.04.2020 JP 2020070978
(43) Date of publication of application: 15.02.2023
(73) Proprietor: The Yokohama Rubber Co., Ltd., Hiratsuka-shi, Kanagawa 254-8601 (JP)
(72) Inventor: SUZUKI Asuka, Hiratsuka-shi, Kanagawa 254-8601 (JP); HARIKAE Shinya, Hiratsuka-shi, Kanagawa 254-8601 (JP)
(74) Representative: Dilg, Haeusler, Schindelmann Patentanwaltsgesellschaft mbH
(86) International application number: PCT/JP2021/012187
(87) International publication number: WO 2021/205874

(56) References cited:
- EP-A1- 2 583 838
- WO-A1-2013/118785
- JP-A- 2001 047 820
- JP-A- 2001 063 312
- JP-A- 2001 206 010
- JP-A- 2001 322 404
- JP-A- 2002 029 214
- JP-A- 2002 059 717
- JP-A- 2006 002 327
- JP-A- 2007 169 833
- JP-A- 2007 290 578
- JP-A- 2008 307 963
- JP-A- 2010 143 285
- JP-A- 2013 159 325
- JP-A- 2013 166 526
- JP-A- H06 247 103
- US-A- 5 415 216

## Description

### Technical Field

The present invention relates to a pneumatic tire using a polyethylene terephthalate (PET) fiber cord for a belt cover layer.

### Background Art

Pneumatic tires for a passenger vehicle or a small truck typically include a carcass layer mounted between a pair of bead portions, a plurality of belt layers disposed on an outer circumferential side of the carcass layer in a tread portion, and a belt cover layer that includes a plurality of organic fiber cords spirally wound along a tire circumferential direction on an outer circumferential side of the belt layer. This structure causes the belt cover layer to contribute to the improvement of high-speed durability and also contribute to the reduction of mid-range frequency road noise.

Although a main organic fiber cord to be used for the belt cover layer is a nylon fiber cord in the related art, it has been proposed to use a polyethylene terephthalate fiber cord (hereinafter referred to as a PET fiber cord) that is highly elastic and inexpensive compared to the nylon fiber cord (see, for example, Patent Document 1). Unfortunately, the PET fiber cord is highly elastic and less likely to elongate compared to the known nylon fiber cord. This increases the rigidity of the tread portion and makes the balance between the rigidity of the tread portion and the sidewall portion worse, and thus steering stability and ride comfort at high speeds tend to be degraded. Therefore, in reducing road noise using the PET fiber cord, measures to satisfactorily maintain steering stability and ride comfort at high speeds are awaited.

### Citation List

### Patent Literature

Patent Document 1: JP 2001-63312 A

Other relevant prior art is known from JP 2001 047820 A, JP 2001 047820 A, JP 2001 206010 A, WO 2013/118785 A1, JP 2006 002327 A, JP 2007 169833 A, JP 2001 322404 A, JP 2007 290578 A, JP H06 247103 A, JP 2002 059717 A, JP 2010 143285 A, US 5 415 216 A and JP 2001 063312 A.

### Summary of Invention

### Technical Problem

An object of the present invention is to provide a pneumatic tire that can provide satisfactorily-maintained steering stability and ride comfort at high speeds in reducing road noise using a PET fiber cord for a belt cover layer.

### Solution to Problem

According to the present invention, the posed problem is solved by a tyre according to claim 1.

### Advantageous Effects of Invention

As a result of diligent research on a pneumatic tire including a belt cover layer made of a PET fiber cord, the present inventor has achieved the present invention by finding that fatigue resistance and hoop effect of a cord suitable for the belt cover layer can be obtained by properly performing dip processing of the PET fiber cord and setting the elongation under a load of 2.0 cN/dtex at 100°C to a predetermined range. That is, according to an embodiment of the present invention, the cover cord constituting the belt cover layer uses the PET fiber cord whose elongation under the load of 2.0 cN/dtex at 100°C ranges from 2.0% to 4.0%, allowing road noise to be effectively reduced while the durability of the pneumatic tire to be satisfactorily maintained. Further, in using such a belt cover layer, the side reinforcing layer is provided as described above, causing satisfactory torque transmission from the bead portions and the sidewall portions to the belt layer and allowing steering stability and ride comfort at high speeds to be satisfactorily maintained.

According to the present invention, a reinforcing cord constituting the side reinforcing layer is a steel cord, and the side reinforcing layer is disposed on an outer side of the carcass layer in the sidewall portions. Optimizing the position and material of the side reinforcing layer in this way provides satisfactory torque transmission from the bead portions and sidewall portions to the belt layer and advantageously and satisfactorily maintains steering stability and ride comfort at high speeds. The steel cord can suitably use an N+M structure in which the number of wires N of the inner layer is two to four and the number of wires M of the outer layer is two to seven and particularly, a 2+2 structure in which the number of wires N of the inner layer is two and the number of wires M of the outer layer is two.

According to an embodiment of the present invention, the reinforcing cord constituting the side reinforcing layer preferably has an inclination angle with respect to the tire circumferential direction of from 15° to 25°. Inclining the reinforcing cord in this way provides satisfactory structure of the side reinforcing layer, allowing sufficient circumferential rigidity to be secured. The inclining also provides satisfactory torque transmission from the bead portions and the sidewall portions to the belt layer, advantageously and satisfactorily maintaining steering stability and ride comfort at high speeds.

According to an embodiment of the present invention, the carcass layer is turned up from an inner side in a tire width direction to an outer side in the tire width direction around a bead core and a bead filler disposed in the bead portions, the carcass layer is formed of a body portion located between the pair of bead portions and a turned-up portion turned up toward the outer side of the bead core and the bead filler in the tire width direction, and the side reinforcing layer is preferably disposed between the bead core and the turned-up portion and between the bead filler and the turned-up portion. Disposing the side reinforcing layer on such a position provides satisfactory torque transmission from the bead portions and the sidewall portions to the belt layer, advantageously and satisfactorily maintaining steering stability and ride comfort at high speeds.

According to the present invention, a length L1 of the side reinforcing layer along the tire radial direction is larger than a length L2 of the bead filler along the tire radial direction, and a difference between the lengths L1 and L2 ranges from 5 mm to 10 mm. Such dimensions provides satisfactory torque transmission from the bead portions and the sidewall portions to the belt layer, advantageously and satisfactorily maintaining steering stability and ride comfort at high speeds.

### Brief Description of Drawings

FIG. 1 is a meridian cross-sectional view illustrating a pneumatic tire according to an embodiment of the present invention.
FIG. 2 is an explanatory diagram schematically illustrating a structure of a steel cord constituting a side reinforcing layer.

### Description of Embodiments

A configuration according to an embodiment of the present invention will be described in detail below with reference to the accompanying drawings.

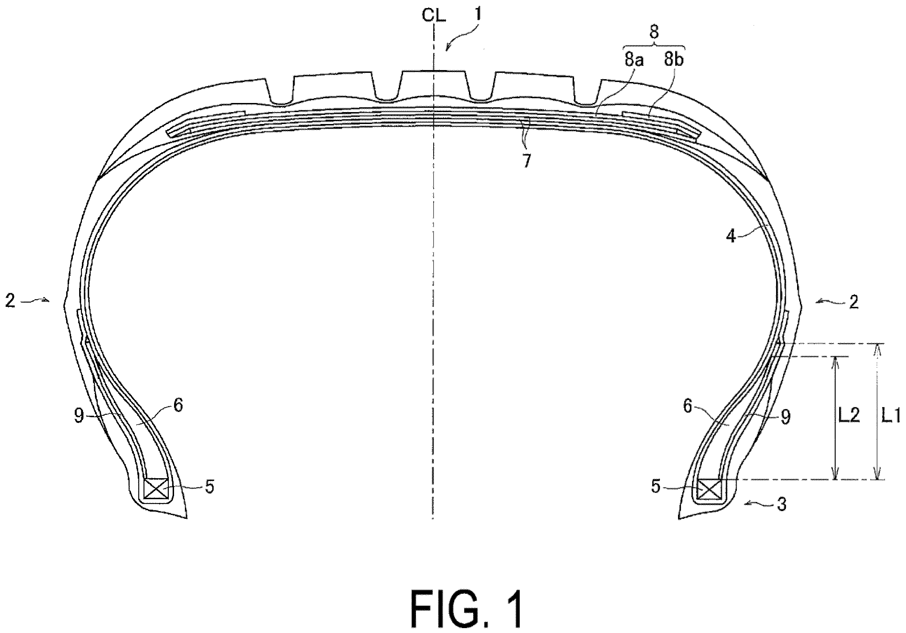

As illustrated in FIG. 1, a pneumatic tire of an embodiment of the present invention includes a tread portion 1, a pair of sidewall portions 2 respectively disposed on both sides of the tread portion 1, and a pair of bead portions 3 each disposed on the inner side of the pair of sidewall portions 2 in the tire radial direction. A reference sign CL in FIG. 1 denotes a tire equator. Although not illustrated in FIG. 1, which is a meridian cross-sectional view, the tread portion 1, the sidewall portions 2, and the bead portions 3 each extend in a tire circumferential direction to form an annular shape. This forms a toroidal basic structure of the pneumatic tire. Although the description using FIG. 1 is basically based on the illustrated meridian cross-sectional shape, all of the tire components extend in the tire circumferential direction and form the annular shape.

In the illustrated example, a plurality of main grooves (four main grooves in the illustrated example) extending in the tire circumferential direction is formed in the outer surface of the tread portion 1; however, the number of main grooves is not limited. In addition to the main grooves, various grooves and sipes that include lug grooves extending in a tire width direction can also be formed.

A carcass layer 4 including a plurality of reinforcing cords (carcass cords) extending in the tire radial direction is mounted between the pair of bead portions 3 on the right and left. A bead core 5 is embedded within each of the bead portions, and a bead filler 6 having an substantially triangular cross-sectional shape is disposed on an outer periphery of the bead core 5. The carcass layer 4 is folded back around the bead core 5 from an inner side to an outer side in the tire width direction. In this way, the bead core 5 and the bead filler 6 are wrapped by a body portion 4a (a portion extending from the tread portion 1 through each of the sidewall portions 2 to a corresponding one of the bead portions 3) and a folded back portion 4b (a portion folded back around the bead core 5 in each of the bead portions 3 and extending toward a corresponding one of the sidewall portions 2) of the carcass layer 4. The carcass cords constituting the carcass layer 4 preferably use, for example, polyester cords.

A plurality (in the illustrated example, two layers) of belt layers 7 are embedded on an outer circumferential side of the carcass layer 4 in the tread portion 1. Each of the belt layers 7 includes a plurality of reinforcing cords (belt cords) inclining with respect to the tire circumferential direction, with the belt cords of the layers intersecting each other. In the belt layers 7, an inclination angle of the belt cord with respect to the tire circumferential direction is set within a range of, for example, from 10° to 40°. For example, steel cords are preferably used as the belt cords constituting the belt layer 7.

A belt cover layer 8 is provided on an outer circumferential side of the belt layers 7 for the purpose of improving high-speed durability and reducing road noise. The belt cover layer 8 includes a reinforcing cord (cover cord) oriented in the tire circumferential direction. An embodiment of the present invention uses an organic fiber cord as a cover cord (the following description may refer to this cover cord as an "organic fiber cord"). In the belt cover layer 8, the angle of the cover cords with respect to the tire circumferential direction is set to, for example, from 0° to 5°. In an embodiment of the present invention, the belt cover layer 8 necessarily includes a full cover layer 8a that covers the entire region of the belt layers 7 and can be configured to include a pair of edge cover layers 8b that locally cover both end portions of the belt layers 7 as necessary (in the illustrated example, both the full cover layer 8a and the edge cover layers 8b are included). The belt cover layer 8 is preferably configured such that a strip material made of at least a single organic fiber cord arranged and covered with coating rubber is wound spirally in the tire circumferential direction, and desirably has, in particular, a jointless structure.

In an embodiment of the present invention, the organic fiber cord constituting the belt cover layer 8 uses a polyethylene terephthalate fiber cord (PET fiber cord) in which the elongation under a load of 2.0 cN/dtex at 100°C ranges from 2.0% to 4.0% and preferably from 2.5% to 3.5%. Using a specific PET fiber cord as the organic fiber cord constituting the belt cover layer 8 in this way can effectively reduce road noise while satisfactorily maintaining durability of the pneumatic tire. When the elongation under a load of 2.0 cN/dtex at 100°C of the PET fiber cord is less than 2.0%, the fatigue resistance of the cord decreases and the durability of the tire decreases. When the elongation under a load of 2.0 cN/dtex at 100°C of this PET fiber cord exceeds 4.0%, the mid-range frequency road noise cannot be sufficiently reduced. Note that in an embodiment of the present invention, the elongation [%] under 2.0 cN/dtex load at 100°C is a value measured by conducting a tensile test in accordance with JIS-L1017 "Test Methods for chemical fiber tire cords" and under the conditions of a grip interval of 250 mm and a tensile speed of 300 ± 20 mm/minute.

Further, this organic fiber cord (PET fiber cord) preferably has an elastic modulus under a load of 2.0 cN/dtex at 100°C of from 3.5 cN/(tex•%) to 5.5 cN/(tex•%). As just described, by using the PET fiber cords having a specific elastic modulus, it is advantageous for effectively reducing road noise while maintaining durability of the pneumatic tire satisfactorily. When the elastic modulus under a load of 2.0 cN/dtex at 100°C of this PET fiber cord is less than 3.5 cN/(tex•%), the mid-range frequency road noise cannot be sufficiently reduced. When the elastic modulus under a load of 2.0 cN/dtex at 100°C of the PET fiber cord exceeds 5.5 cN/(tex•%), the fatigue resistance of the cord decreases and the durability of the tire decreases. In an embodiment of the present invention, the elastic modulus [N/(tex•%)] under a load of 2.0 cN/dtex at 100°C is calculated by conducting a tensile test under the conditions of a grip interval of 250 mm and a tensile speed of 300±20 mm/min in accordance with the "Test methods for chemical fibre tire cords" of JIS-L1017, and converting the inclination of the tangent line at the point corresponding to the load 2.0 cN/dtex of the load-elongation curve into the value per tex.

When this organic fiber cord (PET fiber cord) is used as the belt cover layer 8, the in-tire cord tension may be preferably 0.9 cN/dtex or more, more preferably 1.5 cN/dtex to 2.0 cN/dtex. Setting the in-tire cord tension in this way can reduce heat generation and improve tire durability. When the in-tire cord tension of this organic fiber cord (PET fiber cord) is less than 0.9 cN/dtex, the peak of tanδ rises, and the effect of improving the durability of the tire cannot be sufficiently obtained. The in-tire cord tension of the organic fiber cord (PET fiber cord) constituting the belt cover layer 8 is measured at two turns or more on the inner side in the tire width direction from the terminal of the strip material constituting the belt cover layer.

In a case where polyethylene terephthalate fiber cords (PET fiber cords) are used as the organic fiber cords constituting the belt cover layer 8, the PET fiber cords preferably have a heat shrinkage stress of 0.6 cN/tex or more at 100°C. The heat shrinkage stress at 100°C is set in this way, and thus road noise can be effectively reduced while durability of the pneumatic tire is maintained more effectively and satisfactorily. When the heat shrinkage stress of the PET fiber cords at 100°C is less than 0.6 cN/tex, the hoop effect during traveling cannot be sufficiently improved, and it is difficult to sufficiently maintain high-speed durability. The upper limit value of the heat shrinkage stress of the PET fiber cords at 100°C is not particularly limited, but is preferably, for example, 2.0 cN/tex. Note that in an embodiment of the present invention, the heat shrinkage stress (cN/tex) at 100°C is heat shrinkage stress of a sample cord, which is measured when heated under the conditions of the sample length of 500 mm and the heating condition at 100°C for 5 minutes in accordance with "Test methods for chemical fiber tire cords" of JIS-L1017.

In order to obtain the PET fiber cords having the aforementioned physical properties, for example, it is preferable to properly perform dip processing. In other words, before a calendar process, dip processing with adhesive is performed on the PET fiber cords; however, in a normalizing process after a two-bath treatment, it is preferable that an ambient temperature is set within the range of 210°C to 250°C and cord tension is set in the range of 2.2×10⁻² N/tex to 6.7×10⁻² N/tex. Accordingly, desired physical properties as described above can be imparted to the PET fiber cords. When the cord tension in the normalizing process is smaller than 2.2×10⁻² N/tex, cord elastic modulus is low, and thus the mid-range frequency road noise cannot be sufficiently reduced. In contrast, when the cord tension is greater than 6.7×10⁻² N/tex, cord elastic modulus is high, and thus fatigue resistance of the cords is low.

When the belt cover layer 8 made of a specific organic fiber cord is used as described above, the above-mentioned organic fiber cord (PET fiber cord) has higher elasticity and resistance to elongation as compared with the nylon fiber cord generally used for the conventional belt cover layer, so that the rigidity of the tread portion 1 is high, and the balance between the rigidity of the tread portion 1 and the sidewall portion 2 becomes poor. Thus, there is a risk that the steering stability and ride comfort at high speeds may be degraded. Therefore, as shown in FIG. 1, an embodiment of the present invention provides a side reinforcing layer 9 formed by arranging a plurality of reinforcing cords and covering the plurality of reinforcing cords with rubber in regions from the bead portions 3 to the sidewall portions 2. The side reinforcing layer 9 also has an annular shape extending in the tire circumferential direction, although only a cross-section is displayed in FIG. 1 like the above-mentioned tire constituent member. Providing such a side reinforcing layer 9 provides satisfactory balance of rigidity between the tread portion 1 and the sidewall portions 2 and satisfactory torque transmission from the bead portions 3 and the sidewall portions 2 to the belt layer 7, allowing steering stability and ride comfort at high speeds to be satisfactorily maintained.

The material of the reinforcing cord constituting the side reinforcing layer 9 is a steel cord. In particular, the steel cord can be suitably used from the viewpoint of ensuring sufficient rigidity by the side reinforcing layer 9. The steel cord is a twisted cord obtained by twisting a plurality of steel wires .

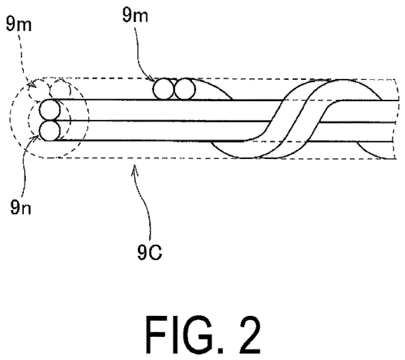

A twisted cord 9C made by twisting a plurality of steel wires is used as the reinforcing cord constituting the side reinforcing layer 9, an N+M structure (2+2 structure in the illustrated example) formed of an inner layer 9n (core) formed of N wires and an outer layer 9m (sheath) formed of M wires twisted around the inner layer 9n is used as the structure thereof as shown in FIG. 2. The number of wires N of the inner layer 9n is preferably two to four, and the number of wires M of the outer layer 9m is preferably two to seven. In particular, the illustrated 2 + 2 structure can be suitably employed. Additionally, the twist directions of the inner layer 9n and the outer layer 9m are not identical and are different. In other words, when the inner layer 9n may be S-twist, the outer layer 9m may be Z-twist, and when the inner layer 9n is Z-twist, the outer layer may be S-twist. When the inner layer 9n is non-twisted, the outer layer 9m may be S twist or Z-twist. In particular, in the present invention, it is preferable that the inner layer 9n is untwisted (a state in which the wires are arranged without being twisted). If the number of wires N of the inner layer of the steel cord (twisted cord 9C) constituting the side reinforcing layer 9 is less than two, the initial elongation of the cord deteriorates. The number of wires N of the inner layer of the steel cord (twisted cord 9C) constituting the side reinforcing layer 9 exceeding four makes the twisted structure not stable. If the number of wires M of the outer layer of the steel cord (twisted cord 9C) constituting the side reinforcing layer 9 is less than two, the cord strength is insufficient. The number of wires M of the outer layer of the steel cord (twisted cord 9C) constituting the side reinforcing layer 9 exceeding seven makes the twisted structures not stable. When the above-mentioned twisted cord 9C having an N+M structure is adopted, the wire strand diameter of the steel wire is preferably 0.17 mm to 0.35 mm. In particular, in the case of the 2+2 structure shown in the figure, the wire strand diameter is preferably 0.22 mm to 0.32 mm, more preferably 0.25 mm.

Regardless of the material of the reinforcing cord, the inclination angle of the reinforcing cord with respect to the tire circumferential direction preferably ranges from 15° to 25°. Inclining the reinforcing cord in this way provides satisfactory structure of the side reinforcing layer 9, allowing sufficient circumferential rigidity to be secured. The inclining also provides satisfactory torque transmission from the bead portions 3 and the sidewall portions 2 to the belt layer 7, advantageously and satisfactorily maintaining steering stability and ride comfort at high speeds. If the inclination angle of the reinforcing cord is less than 15°, the above-mentioned torque transmission becomes insufficient, and it becomes difficult to sufficiently secure steering stability and ride comfort. If the inclination angle of the reinforcing cord exceeds 25°, the circumferential rigidity may be insufficient.

As shown in FIG. 1, the side reinforcing layer 9 is preferably disposed on the outer side of the carcass layer 4 (body portion 4a) in the sidewall portion 2. Further, when the carcass layer 4 is formed of the body portion 4a and the turned-up portion 4b as in the illustrated example, the side reinforcing layer 9 is preferably disposed between the bead core 5 and the turned-up portion 4b and between the bead filler 6 and the turned-up portion 4b. Disposing the side reinforcing layer 9 on such a position provides satisfactory torque transmission above-mentioned, advantageously and satisfactorily maintaining steering stability and ride comfort at high speeds.

The size of the side reinforcing layer 9 is not particularly limited, but when the length of the side reinforcing layer 9 along the tire radial direction is L1 and the length of the bead filler 6 along the tire radial direction is L2, the length L1 is larger than the length L2, and the difference between the lengths L1 and L2 is 5 mm to 10 mm. Such dimensions provides satisfactory torque transmission from the bead portions 3 and the sidewall portions 2 to the belt layer 7, advantageously and satisfactorily maintaining steering stability and ride comfort at high speeds. If the difference between the lengths L1 and L2 is smaller than 5 mm, the rigidity becomes low and the torque transmission becomes insufficient. If the difference between the lengths L1 and L2 exceeds 10 mm, unevenness in the circumferential direction may easily occur on the tire side portion.

An embodiment of the present invention will further be described below by way of Examples, but the scope of an embodiment of the present invention is not limited to such Examples but only by the appended claims.

### Examples

Tires of Conventional Example 1, Comparative Examples 1 and 2, and Examples 1 to 15 were manufactured in which the tires have a tire size of 195/65R15, and have the basic structure illustrated in FIG. 1, and in which the type of organic fiber cord constituting the belt cover layer, the elongation [%] of the organic fiber cord constituting the belt cover layer under a load of 2.0 cN/dtex at 100°C, the presence/absence of the side reinforcing layer, the material of side reinforcing layer (cord structure is also described when the material of the side reinforcing layer is steel cord), the inclination angle of the reinforcing cord constituting the side reinforcing layer, and the difference (L1-L2) between the length L1 of the side reinforcing layer along the tire radial direction and the length L2 of the bead filler along the tire radial direction are made different as shown in Tables 1 and 2.

In Tables 1 and 2, the case where the organic fiber cord constituting the belt cover layer is made of polyethylene terephthalate is indicated as "PET", and the case where the organic fiber cord is made of nylon 66 is indicated as "N66". Similarly, regarding the material of the reinforcing cord constituting the side reinforcing layer, "PET" is used when it is made of polyethylene terephthalate, "N66" is used when it is made of nylon 66, and "aramid" is used when it is made of aramid fiber cord, and "steel" is used when it is made of steel cord. In addition, when the reinforcing cord constituting the side reinforcing layer is a steel cord, the structure of the steel cord is also described.

In any example, the belt cover layer includes a jointless structure in which a strip made of at least a single organic fiber cord (nylon fiber cord or PET fiber cord) covered with coating rubber is wound spirally in the tire circumferential direction. The cord density in the strip is 50 cords/50 mm. In addition, each organic fiber cord (nylon fiber cord or PET fiber cord) has a structure of 1100 dtex/2. Also, in any example, the carcass cord constituting the carcass layer is a PET fiber cord.

In each example, the elongation [%] under a load of 2.0 cN/dtex at 100°C of the cover cord (organic fiber cord) is a value measured in accordance with JIS-L1017 "Test Methods for chemical fiber tire cords" and under the conditions of a grip interval of 250 mm and a tensile speed of 300 ± 20 mm/minute.

Road noise, steering stability, and ride comfort were evaluated for these test tires by the following evaluation methods, and the results are also shown in Tables 1 and 2.

### Road noise

Each of the test tires was mounted on a wheel having a rim size of 15×6J, mounted as front and rear wheels of a passenger vehicle (front wheel drive vehicle) having an engine displacement of 2.5 L, and inflated to an air pressure of 230 kPa, and a sound collecting microphone was placed on an inner side of the window of the driver's seat. A sound pressure level at or near the frequency 315 Hz was measured as the road noise when the vehicle was driven at an average speed of 50 km/h on a test course having a paved road surface. The evaluation results were based on Conventional Example 1 as a reference and indicated the amount of change (dB) to the reference. If the value of the change amount is a negative value, it means that the road noise is reduced.

### Steering stability

Each of the test tires was assembled on a wheel having a rim size of 15×6J, inflated to an air pressure of 240 kPa, and mounted on a test vehicle (four wheel drive vehicle) having an engine displacement of 2000 cc. Sensory evaluations for steering stability were performed on a test course of dry road surfaces by test drivers with two occupants riding in the vehicle. The evaluation results were evaluated by a 5-point method using Conventional Example 1 as 3.0 (reference) and expressed as average points of five test drivers excluding the highest point and the lowest point. Larger evaluation values indicate superior steering stability. Note that these scores of "2.7" or greater mean that good steering stability equivalent to or better than that of Conventional Example was obtained.

### Ride comfort

Each of the test tires was assembled on a wheel having a rim size of 15×6J, inflated to an air pressure of 240 kPa, and mounted on a test vehicle (four wheel drive vehicle) having an engine displacement of 2000 cc. Sensory evaluations for ride comfort were performed on a test course of dry road surfaces by test drivers with two occupants riding in the vehicle. The evaluation results were evaluated by a 5-point method using Conventional Example 1 as 3.0 (reference) and expressed as average points of five test drivers excluding the highest point and the lowest point. Larger evaluation values indicate superior steering stability. Note that these scores of "2.7" or greater mean that favorable steering stability equivalent to or better than that of Conventional Example 1 was obtained.

**[Table 1]**

| Table 1-1 | | | | | | |
|---|---|---|---|---|---|---|
| | | | Conventional Example 1 | Comparative Example 1 | Comparative Example 2 | Example 1 |
| | | Type of organic fiber | N66 | N66 | PET | PET |
| Belt cover layer | Elongation under 2.0 cN/dtex load | % | 7.5 | 7.5 | 2.8 | 2.8 |
| Side reinforcing layer | Presence | | No | Yes | No | Yes |
| | Material | | - | Steel | - | N66 |
| | Cord structure of steel cords | | - | 2 + 2 x 0.25 | - | - |
| | Inclination angle of reinforcing cord | ° | - | 20 | - | 20 |
| | Length difference (L1 - L2) | mm | - | 10 | - | 10 |
| Road noise | | | 0 | 0 | -2.0 | -2.0 |
| Steering stability | | | 3.0 | 2.5 | 2.5 | 2.5 |
| Ride comfort | | | 3.0 | 2.7 | 2.5 | 2.5 |

**Table 1-2**

| | | | Example 2 | Example 3 | Example 4 | Exampl e 5 | Example 6 | Example 7 |
|---|---|---|---|---|---|---|---|---|
| Belt cover layer | Type of organic fiber | | PET | PET | PET | PET | PET | PET |
| | Elongation under 2.0 cN/dtex load | % | 2.8 | 2.8 | 2.8 | 2.8 | 2.0 | 4.0 |
| Side reinforcin g layer | Presence | | Yes | Yes | Yes | Yes | Yes | Yes |
| | Material | | Aramid | Steel | Steel | Steel | Steel | Steel |
| | Cord structure of steel cords | | - | 2 + 2 x 0.25 | 1 x 3 x 0.28 | 2 + 7 x 0.27 | 2 + 2 x 0.25 | 2 + 2 x 0.25 |
| | Inclination angle of reinforcing cord | ° | 20 | 20 | 20 | 20 | 20 | 20 |
| | Length difference (L1 - L2) | mm | 10 | 10 | 10 | 10 | 10 | 10 |
| Road noise | | | -2.0 | -2.0 | -2.0 | -2.0 | -2.3 | -0.8 |
| Steering stability | | | 3.0 | 3.3 | 3.3 | 3.3 | 3.3 | 2.8 |
| Ride comfort | | | 2.8 | 3.2 | 3.0 | 3.0 | 3.0 | 3.0 |

**[Table 2]**

| Table 2-1 | | | | | | |
|---|---|---|---|---|---|---|
| | | | Example 8 | Example 9 | Example 10 | Example 11 |
| Belt cover layer | Type of organic fiber | | PET | PET | PET | PET |
| | Elongation under 2.0 cN/dtex load | % | 2.8 | 2.8 | 2.8 | 2.8 |
| Side reinforcing layer | Presence | | Yes | Yes | Yes | Yes |
| | Material | | Steel | Steel | Steel | Steel |
| | Cord structure of steel cords | | 2 + 2 x 0.25 | 2 + 2 x 0.25 | 2 + 2 x 0.25 | 2 + 2 x 0.25 |
| | Inclination angle of reinforcing cord | ° | 12 | 15 | 25 | 28 |
| | Length difference (L1 - L2) | mm | 10 | 10 | 10 | 10 |
| Road noise | | | -2.0 | -2.0 | -2.0 | -2.0 |
| Steering stability | | | 3.0 | 3.2 | 3.2 | 3.0 |
| Ride comfort | | | 3.3 | 3.2 | 3.0 | 3.0 |

**Table 2-2**

| | | | Example 12 | Example 13 | Example 14 | Example 15 |
|---|---|---|---|---|---|---|
| Belt cover layer | Type of organic fiber | | PET | PET | PET | PET |
| | Elongation under 2.0 cN/dtex load | % | 2.8 | 2.8 | 2.8 | 2.8 |
| Side reinforcing layer | Presence | | Yes | Yes | Yes | Yes |
| | Material | | Steel | Steel | Steel | Steel |
| | Cord structure of steel cords | | 2 + 2 x 0.25 | 2 + 2 x 0.25 | 2 + 2 x 0.25 | 2 + 2 x 0.25 |
| | Inclination angle of reinforcing cord | ° | 20 | 20 | 20 | 20 |
| | Length difference (L1 - L2) | mm | -5 | 0 | 5 | 15 |
| Road noise | | | -2.0 | -2.0 | -2.0 | -2.0 |
| Steering stability | | | 2.5 | 2.8 | 3.2 | 3.3 |
| Ride comfort | | | 2.5 | 2.5 | 3.0 | 3.2 |

As can be seen from Tables 1 and 2, in contrast to Conventional Example 1 as the reference, the tires of Examples 1 to 15 provide reduced road noise and maintained or improved steering stability and ride comfort satisfactorily. On the other hand, in the tire of Comparative Example 1, the organic fiber cord constituting the belt cover layer is made of nylon, and thus the effect of reducing road noise could not be obtained. Moreover, even if the side reinforcing layer was provided, steering stability and ride comfort could not be ensured. In the tire of Comparative Example 2, the organic fiber cord constituting the belt cover layer is formed of PET fiber, and the effect of reducing road noise was obtained. However, the side reinforcing layer is not provided, and thus steering stability and ride comfort could not be ensured.

### Reference Signs List

1 Tread portion
2 Sidewall portion
3 Bead portion
4 Carcass layer
4a Body portion
4b Turned-up portion
5 Bead core
6 Bead filler
7 Belt layer
8 Belt cover layer
8a Full cover layer
8b Edge cover layer
9 Side reinforcing layer
CL Tire equator

## Claims

1. A pneumatic tire, comprising:
a tread portion (1) extending in a tire circumferential direction and having an annular shape;
a pair of sidewall portions (2) respectively disposed on both sides of the tread portion (1);
a pair of bead portions (3) each disposed on an inner side of the pair of sidewall portions (2) in a tire radial direction;
a carcass layer (4) mounted between the pair of bead portions (3);
a plurality of belt layers (7) disposed on an outer circumferential side of the carcass layer (4) in the tread portion (1); and
a belt cover layer (8) disposed on an outer circumferential side of the belt layers (7);
a side reinforcing layer (9) formed by arranging a plurality of reinforcing cords and covering the plurality of reinforcing cords with rubber being disposed in regions from the bead portions (3) to the sidewall portions (2),
the belt cover layer (8) being formed by spirally winding a cover cord covered with a coating rubber along the tire circumferential direction, and the cover cord being a polyethylene terephthalate fiber cord having an elongation under a load of 2.0 cN/dtex at 100°C of from 2.5% to 3.5%;
wherein a reinforcing cord constituting the side reinforcing layer (9) is a steel cord, and the side reinforcing layer (9) is disposed on an outer side of a body portion of the carcass layer (4) in the sidewall portions (2);
wherein the steel cord has an N+M structure in which the number of wires N of an inner layer ranges from two to four, and the number of wires M of an outer layer ranges from two to seven, and the twist directions of the inner layer and the outer layer are different;
wherein a length L1 of the side reinforcing layer (9) along the tire radial direction is larger than a length L2 of the bead filler (6) along the tire radial direction, and a difference between the lengths L1 and L2 ranges from 5 mm to 10 mm.

2. The pneumatic tire according to claim 1, wherein the steel cord has a 2+2 structure in which the number of wires N of the inner layer is two, and the number of wires M of the outer layer is two.

3. The pneumatic tire according to any one of claims 1 to 2, wherein the reinforcing cord constituting the side reinforcing layer (9) has an inclination angle with respect to the tire circumferential direction of from 15° to 25°.

4. The pneumatic tire according to any one of claims 1 to 3, wherein
the carcass layer (4) is turned up from an inner side in a tire width direction to an outer side in the tire width direction around a bead core (5) and a bead filler (6) disposed in the bead portions (3), the carcass layer (4) is formed of a body portion (4a) located between the pair of bead portions (3) and a turned-up portion (4b) turned up toward the outer side of the bead core (5) and the bead filler (6) in the tire width direction, and
the side reinforcing layer (9) is disposed between the bead core (5) and the turned-up portion (4b) and between the bead filler (6) and the turned-up portion (4b).

## Patentansprüche

1. Luftreifen, umfassend:
einen Laufflächenabschnitt (1), der sich in einer Reifenumfangsrichtung erstreckt und eine Ringform aufweist;
ein Paar von Seitenwandabschnitten (2), die auf beiden Seiten des Laufflächenabschnitts (1) angeordnet sind;
ein Paar von Wulstabschnitten (3), die jeweils auf einer Innenseite des Paars von Seitenwandabschnitten (2) in Reifenradialrichtung angeordnet sind;
eine Karkassenschicht (4), die zwischen dem Paar von Wulstabschnitten (3) angebracht ist;
eine Mehrzahl von Gürtelschichten (7), die auf einer Außenumfangsseite der Karkassenschicht (4) in dem Laufflächenabschnitt (1) angeordnet ist; und
eine Gürteldeckschicht (8), die auf einer Außenumfangsseite der Gürtelschichten (7) angeordnet ist;
eine Seitenverstärkungsschicht (9), die durch Einrichten einer Mehrzahl von verstärkenden Corden und Bedecken der Mehrzahl von verstärkenden Corden mit Kautschuk, der in Bereichen von den Wulstabschnitten (3) zu den Seitenwandabschnitten (2) angeordnet ist, gebildet wird,
wobei die Gürteldeckschicht (8) durch spiralförmiges Wickeln eines mit einer Beschichtungskautschuk bedeckten Bedeckungscords entlang der Reifenumfangsrichtung gebildet wird und der Bedeckungscord ein Polyethylenterephthalatfasercord ist, der unter einer Last von 2,0 cN/dtex bei 100 °C eine Verlängerung von 2,5 % bis 3,5 % aufweist;
wobei ein verstärkender Cord, der die Seitenverstärkungsschicht (9) ausmacht, ein Stahlcord ist und die Seitenverstärkungsschicht (9) auf einer Außenseite eines Körperabschnitts der Karkassenschicht (4) in den Seitenwandabschnitten (2) angeordnet ist;
wobei der Stahlcord eine N+M-Struktur aufweist, bei der die Anzahl von Drähten N einer Innenschicht zwischen zwei und vier liegt und die Anzahl von Drähten M einer Außenschicht zwischen zwei und sieben liegt, und die Verdrehungsrichtungen der Innenschicht und der Außenschicht unterschiedlich sind;
wobei eine Länge L1 der Seitenverstärkungsschicht (9) entlang der Reifenradialrichtung größer ist als eine Länge L2 des Wulstfüllers (6) entlang der Reifenradialrichtung und ein Unterschied zwischen den Längen L1 und L2 in einem Bereich von 5 mm bis 10 mm liegt.

2. Luftreifen nach Anspruch 1, wobei der Stahlcord eine 2+2-Struktur aufweist, bei der die Anzahl von Drähten N der Innenschicht zwei beträgt und die Anzahl von Drähten M der Außenschicht zwei beträgt.

3. Luftreifen nach einem der Ansprüche 1 bis 2, wobei der verstärkende Cord, der die Seitenverstärkungsschicht (9) ausmacht, einen Neigungswinkel in Bezug auf die Reifenumfangsrichtung von 15° bis 25° aufweist.

4. Luftreifen nach einem der Ansprüche 1 bis 3, wobei
die Karkassenschicht (4) von einer Innenseite in Reifenbreitenrichtung zu einer Außenseite in Reifenbreitenrichtung um einen Wulstkern (5) und einen Wulstfüller (6) umgeschlagen ist, die in den Wulstabschnitten (3) angeordnet sind, die Karkassenschicht (4) aus einem Körperabschnitt (4a) gebildet ist, der sich zwischen dem Paar von Wulstabschnitten (3) und einem umgeschlagenen Abschnitt (4b), der in Reifenbreitenrichtung zu der Außenseite des Wulstkerns (5) und des Wulstfüllers (6) hin umgeschlagen ist, befindet, und
die Seitenverstärkungsschicht (9) zwischen dem Wulstkern (5) und dem umgeschlagenen Abschnitt (4b) und zwischen dem Wulstfüller (6) und dem umgeschlagenen Abschnitt (4b) angeordnet ist.

## Revendications

1. Pneumatique, comprenant :
une partie de bande de roulement (1) s'étendant dans une direction circonférentielle de pneu et ayant une forme annulaire ;
une paire de parties de flanc (2) disposées respectivement de part et d'autre de la partie de bande de roulement (1) ;
une paire de parties de talon (3) disposées chacune sur un côté interne de la paire de parties de flanc (2) dans une direction radiale de pneu ;
une couche de carcasse (4) montée entre la paire de parties talon (3) ;
une pluralité de couches de courroie (7) disposées sur un côté circonférentiel externe de la couche de carcasse (4) dans la partie de bande de roulement (1) ; et
une couche de recouvrement de courroie (8) disposée sur un côté circonférentiel externe des couches de courroie (7) ;
une couche de renforcement de côté (9) formée par l'agencement d'une pluralité de cordes de renforcement et le recouvrement de la pluralité de cordes de renforcement avec du caoutchouc étant disposée dans des régions allant des parties de talon (3) aux parties de flanc (2),
la couche de recouvrement de courroie (8) étant formée par l'enroulement en spirale d'une corde de recouvrement recouverte avec un caoutchouc de revêtement le long de la direction circonférentielle de pneu, et la corde de recouvrement étant une corde en fibre de polyéthylène téréphtalate ayant un allongement sous une charge de 2,0 cN/dtex à 100 °C allant de 2,5 % à 3,5 % ;
dans lequel une corde de renforcement constituant la couche de renforcement de côté (9) est une corde en acier, et la couche de renforcement de côté (9) est disposée sur un côté externe d'une partie de corps de la couche de carcasse (4) dans les parties de flanc (2) ;
dans lequel la corde en acier a une structure N+M où le nombre de fils N d'une couche interne s'échelonne de deux à quatre, et le nombre de fils M d'une couche externe s'échelonne de deux à sept, et les directions de torsion de la couche interne et de la couche externe sont différentes ;
dans lequel une longueur L1 de la couche de renforcement de côté (9) le long de la direction radiale de pneu est supérieure à une longueur L2 de la garniture de talon (6) le long de la direction radiale de pneu, et une différence entre les longueurs L1 et L2 s'échelonne de 5 mm à 10 mm.

2. Pneumatique selon la revendication 1, dans lequel la corde en acier a une structure 2+2 où le nombre de fils N de la couche interne est de deux, et le nombre de fils M de la couche externe est de deux.

3. Pneumatique selon l'une quelconque des revendications 1 à 2, dans lequel la corde de renforcement constituant la couche de renforcement de côté (9) a un angle d'inclinaison par rapport à la direction circonférentielle de pneu allant de 15° à 25°.

4. Pneumatique selon l'une quelconque des revendications 1 à 3, dans lequel
la couche de carcasse (4) est retournée d'un côté interne dans une direction de largeur de pneu à un côté externe dans la direction de largeur de pneu autour d'une âme de talon (5) et d'une garniture de talon (6) disposées dans les parties de talon (3), la couche de carcasse (4) est formée d'une partie de corps (4a) située entre la paire de parties de talon (3) et une partie retournée (4b) retournée vers le côté externe de l'âme de talon (5) et de la garniture de talon (6) dans la direction de largeur de pneu, et
la couche de renforcement de côté (9) est disposée entre l'âme de talon (5) et la partie retournée (4b) et entre la garniture de talon (6) et la partie retournée (4b).
